# EUROPÄISCHE PATENTSCHRIFT

(11) **EP 4 486 601 B1**
(45) Veröffentlichungstag und Bekanntmachung des Hinweises auf die Patenterteilung: **24.12.2025**
(21) Anmeldenummer: 23702792.5
(22) Anmeldetag: 31.01.2023
(51) Int. Cl.: B60R 7/04

(54) **FIXIERUNGSVORRICHTUNG**
FIXING DEVICE
DISPOSITIF DE FIXATION

(30) Priorität: 03.03.2022 DE 102022202191
(43) Veröffentlichungstag der Anmeldung: 08.01.2025
(73) Patentinhaber: VOLKSWAGEN AKTIENGESELLSCHAFT, 38440 Wolfsburg (DE)
(72) Erfinder: SCHINDEHÜTTE, Christian, 38118 Braunschweig (DE); BURGGRAF, Axel, 38368 Querenhorst (DE)
(86) Internationale Anmeldenummer: PCT/EP2023/052321
(87) Internationale Veröffentlichungsnummer: WO 2023/165768

(56) Entgegenhaltungen:
- DE-A1- 10 236 582
- DE-B3- 102020 200 119
- US-B1- 6 278 676

## Beschreibung

Die Erfindung betrifft eine Fixierungsvorrichtung zur lösbaren Fixierung eines Gegenstandes an einer Aufnahme, insbesondere an einer in einem Fahrzeug angeordneten Aufnahme, wobei die Aufnahme mindestens zwei zueinander beabstandete Aufnahmeelemente umfasst.

Die DE 10 2020 200 119 B3 beschreibt einen Fixierungsmechanismus, gemäß dem Oberbegriff des Anspruchs 1, mit dem ein Gegenstand an einem Befestigungselement (z.B. an einer Öse) einer Aufnahmeeinrichtung, die insbesondere in einem Kraftfahrzeug angeordnet ist, reversibel (d.h. lösbar) fixierbar ist. Der bekannte Fixierungsmechanismus umfasst ein Basiselement und daran verschiebbar gelagert eine Verschiebeeinheit mit einer Auflageeinrichtung zur Auflage auf der Öse. Die Verschiebeeinheit ist mit einer Rasteinrichtung mechanisch verbunden. Durch Verschiebung der Auflageeinrichtung ist eine auf die Verschiebeeinheit wirkende Verrastung der Rasteinrichtung aufhebbar, so dass die Verschiebeeinheit durch wenigstens ein Antriebselement bewegt wird. Der Fixierungsmechanismus umfasst weiterhin ein Getriebe, das die Bewegung der Verschiebeeinheit in eine Rotationsbewegung einer Welle überträgt. An der Welle sind zwei Druckelemente axial beabstandet angeordnet, die sich bei Rotation der Welle an jeweils eine zugeordnete, entsprechend beabstandete Öse der Aufnahmeeinrichtung anlegen und gegen diese drücken, um das Druckelement reib- und/oder klemmkraftbedingt zu fixieren. Bei unsachgemäßem oder nicht ausreichend sorgfältigem Aufsetzen des Basiselements auf die Ösen ist nicht in jedem Fall verhindert und/oder für den Nutzer ersichtlich, dass keine vollständige Fixierung erfolgt ist.

Die US 6 278 676 B1 betrifft ein Mediaplayer-System für ein Fahrzeug, das eine lösbare Fixierung des Mediaplayers in dem Fahrzeug erlaubt, um diesen bedarfsweise von dem Fahrzeug getrennt zu verwenden. Dazu weist das Gehäuse des Mediaplayers wenigstens zwei in Fahrzeuglängsrichtung hintereinander in jeweils einem Schlitz angeordnete Verriegelungsstifte auf, die jeweils mit zwei auf einer Achse angeordneten, axial beabstandeten primären sowie sekundären Rasthaken kooperieren. Die primären Rasthaken weisen jeweils eine zur Längsachse des jeweiligen Schlitzes geneigte Hakenkontaktfläche auf, die in einer verriegelten Position in Kontakt mit dem zugeordneten Verriegelungsstift sind und Vibrationen und Klappergeräusche verhindern. Allerdings können, insbesondere in einem Crashfall wirkende, äußere Kräfte aufgrund der geneigten Hakeneingriffsfläche dazu führen, dass die Verriegelungsstifte außer Eingriff mit den primären Rasthaken gelangen. Deshalb sind die sekundären Rasthaken vorgesehen, deren Hakenkontaktflächen senkrecht zur Längsachse des Schlitzes orientiert sind. Dadurch können die äußeren Kräfte diese sekundären Verriegelungshaken nicht in Richtung ihrer Freigabeposition bewegen, so dass auch unter äußerer Stoßbelastung ein sicherer Halt des Mediaplayers sichergestellt ist.

Die DE 102 44 328 B4 betrifft ein entlang einer Führungsschiene verfahrbares Tischmodul, das ein Basisteil mit einer Rasteinrichtung aufweist, die wenigstens ein bewegliches Rastelement umfasst, das somit mit einem Rastgegenelement in der Führungsschiene in und außer Eingriff bringbar ist. Am Basisteil sind auf gegenüberliegenden Seiten zwei Handgriffe angeordnet, die über einen Mechanismus funktional so verbunden sind, dass je nach Zugänglichkeit einer der Handgriffe oder beide Handgriffe zusammen betätigt werden können, um das Tischmodul entlang der Führungsschiene zu verfahren.

Vor diesem Hintergrund besteht eine Aufgabe der Erfindung darin, eine komfortabel zu bedienende Fixierungsvorrichtung bereitzustellen, die eine hohe Sicherheit insbesondere bei Einwirkung äußerer Stoßkräfte, zum Beispiel in einer Unfallsituationen (Crashfall) eines Fahrzeugs, gewährleistet.

Diese Aufgabe wird durch eine Fixierungsvorrichtung mit den Merkmalen des Patentanspruchs 1 gelöst.

Weitere bevorzugte Ausgestaltungen der Erfindung ergeben sich nachfolgend aus den übrigen, in den Unteransprüchen und in der nachfolgenden Beschreibung genannten sowie in den Figuren der Zeichnung dargestellten Merkmalen, wobei die einzelnen Merkmale grundsätzlich unabhängig voneinander und in beliebiger Kombination realisiert werden können.

Demgemäß weist die erfindungsgemäße Fixierungsvorrichtung zur lösbaren Fixierung eines Gegenstandes an einer Aufnahme, die mindestens zwei zueinander beabstandete Aufnahmeelemente umfasst und insbesondere in einem Fahrzeug angeordnet sein kann, auf:
- eine Drehfallenachse und eine Sperrklinkenachse,
- zwei Drehfallenklinken, die auf der Drehfallenachse den Aufnahmeelementen zugeordnet und diesen entsprechend beabstandet so gelagert sind, dass sie unabhängig voneinander jeweils in eine Verriegelungsposition, in der sie in fixierendem Eingriff mit dem ihr jeweils zugeordneten Aufnahmeelement sind, und in eine Entriegelungsposition, in der sie außer Eingriff mit dem ihr jeweils zugeordneten Aufnahmeelement sind, verschwenkbar sind, und
- zwei auf der Sperrklinkenachse angeordnete Sperrklinken, die jeweils mit einer zugeordneten Drehfallenklinke zusammenwirken und die relativ zueinander winkelfest sind,
- so dass die Sperrklinken nur dann in eine Verriegelungslage verschwenkbar sind, in der sie die ihnen jeweils zugeordnete Drehfallenklinke in deren Verriegelungsposition halten, wenn beide Drehfallenklinken in ihre Verriegelungsposition gelangt sind.

Ein wesentlicher Vorteil der Erfindung besteht damit darin, dass die Sperrklinken nur dann in eine Verriegelungslage einfahren bzw. verschwenken können, wenn die unabhängig voneinander auf der Drehfallenachse verschwenkbaren Drehfallenklinken sich tatsächlich und ordnungsgemäß in ihrer zur Verriegelung bereiten Position befinden. Damit liegt vorteilhafterweise eine eindeutige Zustandsinformation über die Fixierung des Gegenstandes in der bzw. an der Aufnahme vor. Diese Zustandsinformation kann beispielsweise direkt durch Lagebestimmung der Sperrklinken oder durch Winkelbestimmung der Sperrklinkenachse gewonnen werden. Für den Nutzer kann dadurch komfortabel sichergestellt und angezeigt werden, dass eine einwandfreie Fixierung des Gegenstandes vorliegt. Bei nicht korrekter Fixierung kann eine entsprechende Anzeige generiert werden. Eine nicht korrekte Fixierung kann z.B. auftreten, wenn die Aufnahmeelemente in den Fahrzeugboden verschwenkbare Haken oder Ösen sind, die nur in aufgestellter, aus dem Fahrzeugboden heraus geschwenkter Position (Funktionsposition) die korrekte Fixierung des Gegenstandes ermöglichen und der Nutzer es versäumt hat, alle Aufnahmeelemente in die Funktionsposition zu bringen.

Erfindungsgemäß ist also sichergestellt, dass die Sperrklinken nur synchron in die jeweils zugeordnete Drehfallenklinke einfahren können. Konstruktiv lässt sich dies bevorzugt besonders elegant dadurch erreichen, dass die Sperrklinken auf der Sperrklinkenachse drehfest angeordnet sind.

Zudem zeichnet sich die erfindungsgemäße Fixierungsvorrichtung gegenüber dem eingangs genannten Stand der Technik durch Kostenvorteile, reduziertes Gewicht und einen geringeren Bauraumbedarf aus.

Eine besonders komfortable Bedienung der Fixierungsvorrichtung ist dadurch realisierbar, dass auf die Sperrklinkenachse und/oder auf die Sperrklinken eine Betätigungseinrichtung einwirkt, die bei Betätigung bewirkt, dass die Sperrklinke aus der Verriegelungslage unter Bewegungsfreigabe der Drehfallenklinke heraus schwenkbar ist.

Eine hinsichtlich der zuvor erwähnten Zustandsinformation vorteilhafte Ausgestaltung der Erfindung sieht vor, dass die Betätigungseinrichtung einen Bowdenzug und eine mit diesem zusammenwirkende Betätigungstaste aufweist und dass die Betätigungstaste nur dann in eine die Fixierung des Gegenstandes anzeigende Stellung gelangt, wenn beide Sperrklinken in ihrer Verriegelungslage sind. Bevorzugt verdeckt die Betätigungstaste in ihrer Stellung, in der sie die Fixierung des Gegenstandes anzeigt, einen Indikator, der andernfalls sichtbar ist. Selbstverständlich sind auch andere Bedienelemente denkbar, beispielsweise kann anstelle der Betätigungstaste auch ein Drehknopf oder Schwenkhebel zum Einsatz kommen, der einen Indikator für die vollständige Verriegelung abdecken und freigeben kann.

Eine weitere bevorzugte Ausgestaltung der Erfindung sieht vor, dass die Drehfallenklinken bei Lösung der Fixierung des Gegenstandes aus ihrer Entriegelungsposition in eine Ruheposition verschwenken, in der ein Eingriffsbereich für das Aufnahmeelement der jeweiligen Drehfallenklinke gegen unbeabsichtigten Eingriff geschützt ist. Die Drehfallenklinken sind in der Ruheposition somit vor einem unbeabsichtigten Verhaken mit oder Eingreifen in äußere Objekte oder Materialien geschützt, was insbesondere vorteilhaft ist, wenn der aus dem Fahrzeug entnommene Gegenstand andernorts - z.B. auf dem Boden oder einem faserigen Untergrund, wie z.B. einem Teppich - abgestellt ist.

Die Überführung des Gegenstandes in seine fixierte Position ist nach einer vorteilhaften Ausgestaltung der Erfindung besonders komfortabel möglich, indem jede Drehfallenklinke eine Wirkfläche aufweist, auf die das jeweilige Aufnahmeelement in einer senkrechten Zubewegung beim initialen Fixierungsvorgang auftrifft, wobei die Drehfallenklinke allein durch die senkrechte Zubewegung aus ihrer Ruheposition über die Entriegelungsposition in die Verriegelungsposition verschwenkt. Damit kann sich der Nutzer vollständig auf das Positionieren und senkrechte Absetzen des zu fixierenden Gegenstandes auf die Aufnahme konzentrieren.

Um störende Vibrations- oder Klappergeräusche und unerwünschte Bewegungen der Elemente und Komponenten der erfindungsgemäßen Fixierungsvorrichtung im entriegelten bzw. entnommenen Zustand des Gegenstandes zu vermeiden, sieht eine vorteilhafte Ausgestaltung der Erfindung vor, dass jede Sperrklinke in Richtung auf ihre Verriegelungslage vorgespannt ist und sich in der Entriegelungsposition oder Ruheposition der Drehfallenklinke auf der Drehfallenklinke positionsstabilisierend abstützt.

Um im verriegelten Betrieb, insbesondere während der Fahrt eines mit einer erfindungsgemäßen Fixierungsvorrichtung ausgestatteten Fahrzeugs, entstehende Schwingungen und damit verbundene Geräusche der Verriegelungsmechanik in dem Gegenstand der erfindungsgemäßen Fixierungsvorrichtung zu unterbinden, ist nach einer vorteilhaften Fortbildung der Erfindung zu jeder Sperrklinke eine kooperierende, der Schwenkbewegung der Sperrklinke in die Verriegelungsposition nacheilende Dämpfungsklinke vorgesehen, die in der Verriegelungsposition gegenüber der Sperrklinke mit geringerem Kontaktspiel zu der zugeordneten Drehfallenklinke ausgestattet ist.

Ausführungsbeispiele der Erfindung werden nachfolgend anhand einer Zeichnung weiter erläutert. Es zeigen:
- Figur 1: einen lösbar an einer Aufnahme eines Fahrzeugs fixierbaren Gegenstand in perspektivischer Ansicht in teilweiser Explosionsdarstellung,
- Figur 2: den Bereich A aus Figur 1 in vergrößerter Darstellung,
- Figuren 3a bis 3d: den Bewegungsablauf bei Verriegelung einer Fixierungsvorrichtung,
- Figuren 4a bis 4d: den Bewegungsablauf bei Entriegelung der Fixierungsvorrichtung,
- Figur 5: für einen Verriegelungsvorgang wesentliche Elemente der Figur 2,
- Figur 6: Verriegelungselemente aus Figur 2 und 3 bei der finalen Fixierung des Gegenstandes an einer Aufnahme und
- Figur 7: in perspektivischer Ansicht Elemente einer Betätigungseinrichtung der Fixierungsvorrichtung.

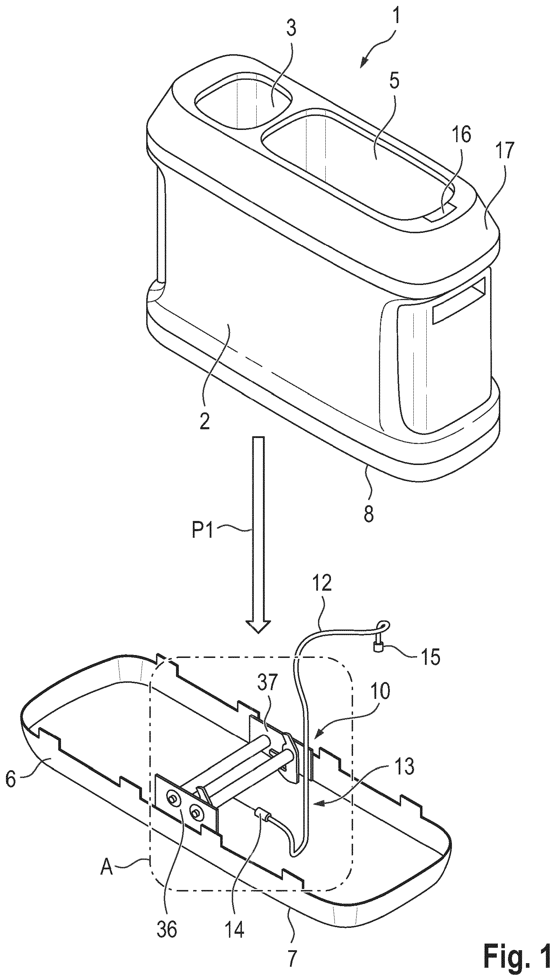

Figur 1 zeigt einen Gegenstand 1, der zur lösbaren Fixierung an einer (in Figur 1 nicht dargestellten) Aufnahme in einem Fahrzeug ausgebildet ist.

Im Rahmen der vorliegenden Erfindung ist der Begriff "Gegenstand" weit zu verstehen und umfasst beispielsweise u.a. Ausstattungskomponenten für den Fahrzeuginnenraum, die der Nutzer in einfacher und flexibler Weise mitführen bzw. aus dem Fahrzeug entnehmen kann. Dies kann wünschenswert sein, um zusätzlichen Laderaum zu schaffen und/oder spezifische Komponenten oder Aufbewahrungseinrichtungen und/oder technisches Equipment in dem Fahrzeug zu installieren und bedarfsweise aus diesem zu entfernen. In den nachfolgend beschriebenen Ausführungsbeispielen ist der Gegenstand - ohne die Erfindung hierauf zu beschränken - eine Aufnahmebox, die zwischen dem Fahrersitz und dem Beifahrersitz eines Fahrzeugs angeordnet werden kann. Selbstverständlich kann die erfindungsgemäße Fixierungsvorrichtung auch dazu dienen, einen Gegenstand in anderer Raumorientierung, beispielsweise an Fahrzeuginnenseitenwänden, oder außerhalb des Fahrzeugs zu fixieren.

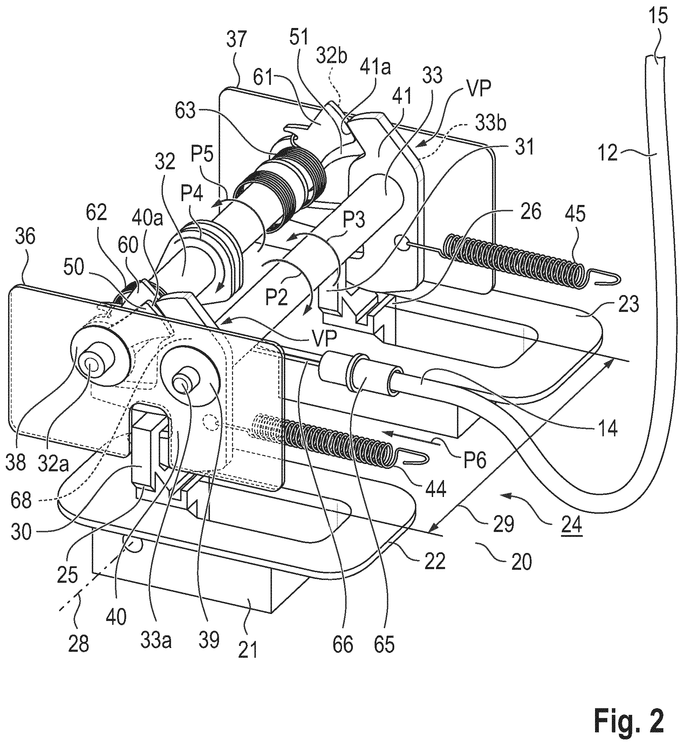

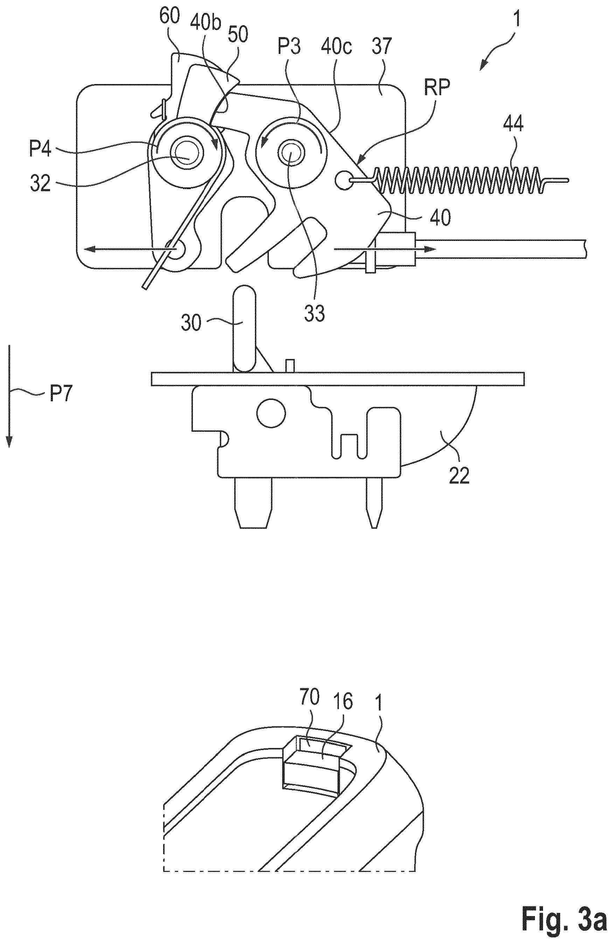

Der Gegenstand 1 umfasst einen Behälter 2 mit Ablagebereichen 3 und einem Stauraum 5, der im montierten Zustand fest mit einer in Figur 1 getrennt dargestellten Basis 6 verbunden ist. Die Basis setzt zur Fixierung an einer Aufnahme (Figuren 2 und 3a bis 3d) mit ihrer Unterseite 7 auf einem dafür vorgesehenen Bodenbereich des Fahrzeugs auf und ist mittels einer auf der Basis 6 angeordneten Fixierungsvorrichtung 10 mit der (in Figur 1 nicht dargestellten) Aufnahme lösbar fest verbindbar. Zur Montage wird der Behälter 2 wie durch den Pfeil P1 angedeutet mit seinem unteren Rand 8 unmittelbar auf der Basis 6 befestigt.

In Figur 1 ist andeutungsweise ein Bowdenzug 12 als Teil einer Betätigungseinrichtung 13 erkennbar, dessen eines Ende 14 in noch näher erläuterter Weise zum Entriegeln bzw. zum Lösen der Fixierung mit einer Mechanik der Fixierungsvorrichtung 10 verbunden und dessen anderes Ende 15 mit einer Betätigungstaste 16 in Wirkverbindung ist, die am oberen Rand 17 des Behälters 2 angeordnet ist.

Figur 2 zeigt in vergrößerter Darstellung den Bereich A aus Figur 1, wobei aus Gründen der Übersichtlichkeit in Figur 1 ersichtliche Elemente (z.B. die Basis 6) weggelassen sind. In die dem Gegenstand 1 bzw. der Basis 6 zugewandte Oberseite 20 des nicht näher dargestellten Fahrzeugbodens (Chassis) 21 sind Träger 22, 23 eingelassen, die Teile einer fahrzeugseitigen Aufnahme 24 für den Gegenstand 1 (Figur 1) sind. Die Aufnahme 24 weist außerdem Aufnahmeelemente 25, 26 auf, die in diesem Ausführungsbeispiel als um eine Schwenkachse 28 verschwenkbare und in einem Abstand 29 beabstandet zueinander angeordnete Fangösen 30, 31 ausgebildet sind. Die Fangösen 30, 31 sind um die Schwenkachse 28 entgegen dem Uhrzeigersinn in die in Figur 2 dargestellte Funktionsposition verschwenkbar, in der sie in nachfolgend detailliert erläuterter Weise mit der Fixierungsvorrichtung 10 kooperieren. Bei Nichtgebrauch bzw. bei entferntem Gegenstand 1 können die Fangösen 30, 31 um etwa 90° im Uhrzeigersinn um die Schwenkachse 28 in eine Nichtgebrauchslage in den jeweiligen Träger 22, 23 geklappt werden, in der sie in annähernd einer Ebene mit den Trägern 22, 23 liegen.

Nachfolgend werden wesentliche Elemente der Fixierungsvorrichtung im Detail erläutert. Die Fixierungsvorrichtung weist eine Sperrklinkenachse 32 und eine Drehfallenachse 33 auf, die mit ihren Achsenden 32a, 32b; 33a, 33b in entsprechenden Bohrungen seitlicher Lagerteile 36, 37 der Basis 6 (Figur 1) gelagert und mittels aufgeschobener Sicherungsringe (von denen Figur 2 exemplarisch nur die an dem Lagerteil 36 anliegenden Sicherungsringe 38, 39 zeigt) gehalten.

Auf der Drehfallenachse 33 sind in dem gleichen Abstand 29 wie die Fangösen 30, 31 beabstandete Drehfallenklinken 40, 41 gelagert, die um die Drehfallenachse 33 (wie durch Pfeilrichtung P2 im Uhrzeigersinn und P3 entgegen dem Uhrzeigersinn angedeutet) verschwenkbar sind. Die Drehfallenklinken 40, 41 sind durch Zugfedern 44, 45, die mit ihrem einen Ende jeweils an der zugeordneten Drehfallenklinke angreifen und mit ihrem anderen Ende (nicht dargestellt) an der Basis 6 (Figur 1) fixiert sind, in Pfeilrichtung P2 vorgespannt.

Auf der parallel zur Drehfallenachse 33 gelagerten Sperrklinkenachse 32 sind mit den Drehfallenklinken 40, 41 in noch näher erläuterter Weise kooperierende Sperrklinken 50, 51 drehfest gelagert. Die Sperrklinken nehmen so also stets dieselbe winkeltreue Position relativ zueinander ein. Dies kann konstruktiv selbstverständlich auch anders realisiert sein, indem beispielsweise die Sperrklinken miteinander drehstarr verbunden sind. Mit anderen Worten: Die Sperrklinken 50, 51 können nur synchron verschwenken oder in die Drehfallenklinken 40, 41 einfahren, also in der gezeigten Konstruktion nur gemeinsam mit der Sperrklinkenachse 32 im Uhrzeigersinn (Pfeilrichtung P4) und entgegen dem Uhrzeigersinn (Pfeilrichtung P5) verschwenken.

Wie in Figur 2 bereits erkennbar und nachfolgend noch detailliert erläutert wird, sind in dieser Position die Sperrklinken 50, 51 im Uhrzeigersinn in Drehrichtung (Pfeilrichtung) P4 bereits derart weit verschwenkt, dass sie mit Kontaktflächen 40a, 41a der Drehfallenklinken 40, 41 kooperieren. Auf der Sperrklinkenachse 32 sind federvorgespannte nacheilende Dämpfungsklinken (auch als Komfortklinken bezeichnet) 60, 61 vorgesehen. Diese sind durch sich an der Sperrklinkenachse 32 einerseits und an den Dämpfungsklinken 60, 61 andererseits abstützende Schraubenfedern 62, 63 in Pfeilrichtung P4 vorgespannt, so dass sie in der in Figur 2 dargestellten Verriegelungsposition VP in Anlage an die Kontaktflächen 40a bzw. 41a gelangen.

In Figur 2 ist der Bowdenzug 12 erkennbar, dessen eines Ende 14 mit seinem Bowdenzugmantel in einer Halterung 65 ortsfest gelagert ist, wobei das Ende 66 des Bowdenzugseils in einer in Figur 2 nicht erkennbaren Halterung 68 aufgenommen ist, so dass das Bowdenzugseil in der in Figur 2 gezeigten Verriegelungsposition der Fixierungsvorrichtung 10 durch auf die Sperrklinkenachse 32 im Uhrzeigersinn (Pfeilrichtung P4) wirkende Vorspannkräfte in Pfeilrichtung P6 vorgespannt ist.

Nachfolgend wird anhand der Figuren 3a bis 3d der Bewegungsablauf beim Überführen des Gegenstandes 1 in die Verriegelungsposition VP zur Fixierung des Gegenstandes an der Aufnahme mithilfe der Fixierungsvorrichtung erläutert. Dabei sind in den Figuren 3a bis 3d nur die für den Verriegelungsvorgang wesentlichen, grundsätzlich bereits zuvor erläuterten Elemente der Fixierungsvorrichtung auf nur einer Seite der Fixierungsvorrichtung gezeigt. Die axial beabstandeten, funktional entsprechenden Elemente im Bereich des seitlichen Lagerteils 37 wirken gleichermaßen zusammen und sind deshalb nicht einzeln erläutert.

Figur 3a zeigt die Ausgangsposition, in der der Gegenstand 1 von dem Träger 22 bzw. der aufgestellten Fangöse 30 in vertikaler Richtung noch so weit beabstandet ist, dass Fangöse 30 und Drehfallenklinke 40 vollständig außer Eingriff sind. Die Drehfallenklinke ist aufgrund der von der Feder 44 ausgeübten Zugkraft in Pfeilrichtung P3 selbstständig in eine Ruheposition RP verschwenkt, in der die Sperrklinke 50 und die Dämpfungsklinke 60 an einer oberen Kontaktfläche (Ruhefläche) 40b der Drehfallenklinke 40 anliegen. Dadurch sind diese kooperierenden Elemente der Fixierungsvorrichtung vorteilhafterweise lagestabilisiert und unbeabsichtigte Bewegungen oder auch Geräusche werden vermieden. Ein Rückenbereich 40c der Drehfallenklinke 40 befindet sich bezogen auf die Drehfallenachse 33 in "4-Uhr-Position". Dies wird durch die Vorspannkraft der Schraubenfeder 62 bewirkt, die die Sperrklinkenachse 32 im Uhrzeigersinn (Pfeilrichtung P4) vorspannt.

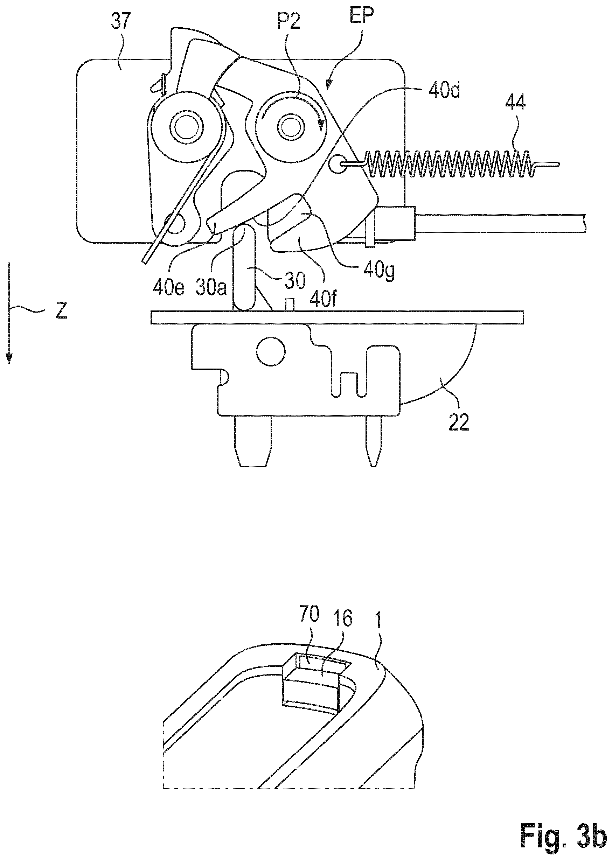

Nachfolgend werden der Gegenstand 1 und damit dessen Basis 6 und die relevanten Elemente der Fixierungsvorrichtung 10 in einer Zubewegung Z in Pfeilrichtung P7 vertikal nach unten auf den Träger 22 und die Fangöse 30 zu bewegt. Dadurch gelangt (Figur 3b) nun das obere Ende 30a der aufgestellten Fangöse 30 in Anlage mit der Innenseite 40d einer vorstehenden Fangnase 40e der Drehfallenklinke 40. Die Fangnase 40e bildet zusammen mit einem gegenüberliegenden Fanghaken 40f eine Ausnehmung oder einen Fangbereich 40g, der sich noch im entriegelten Zustand (Entriegelungsposition EP der Drehfallenklinke 40) befindet.

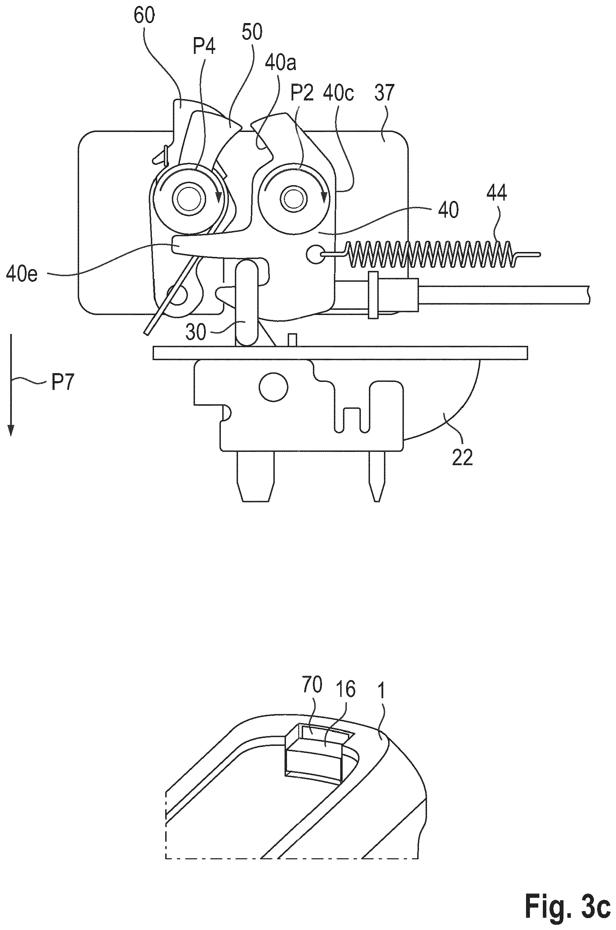

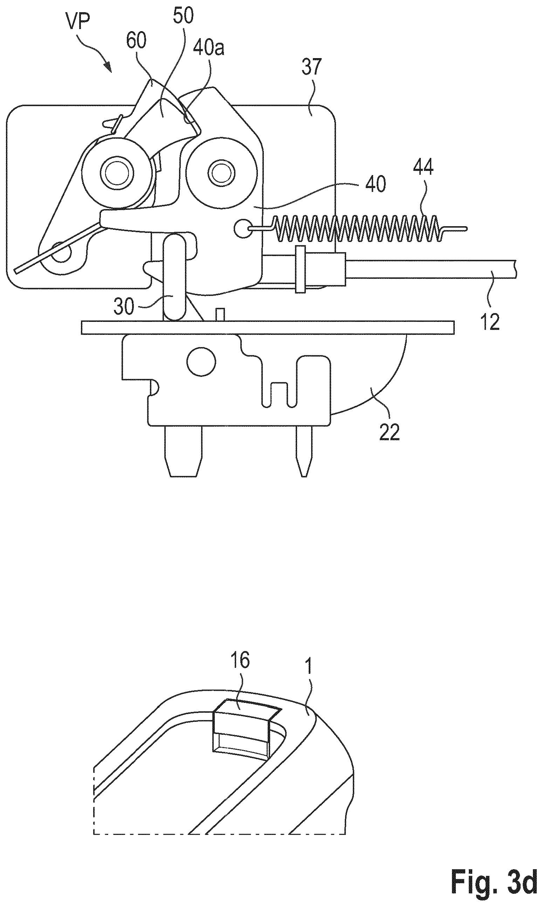

Da nun die Fangöse 30 in Kontakt mit der Fangnase 40e ist, erfolgt bei weiterem Absenken (Zubewegung zur Aufnahme hin) des Gegenstandes in Pfeilrichtung P7 ein weiteres Verschwenken der Drehfallenklinke 40 in Pfeilrichtung P2 aus der Entriegelungsposition EP zur Verrieglungsposition VP (Figur 3c). Dabei spannt sich die Zugfeder 44 weiter. Wie Figur 3c zeigt, ist in dieser Position der Weg für die Sperrklinke 50 in eine Verriegelungslage VL (Figur 3d) und die Dämpfungsklinke 60 freigegeben, die aufgrund ihrer Federvorspannung in Pfeilrichtung P4 verschwenken und nacheinander in Anlage mit der Kontaktfläche 40a gelangen und somit die Drehfallenklinke in einer Verriegelungsposition verriegeln. Die Drehfallenklinke 40 verschwenkt dabei so lange weiter, bis ihr Rücken 40c in etwa "6-Uhr-Position" gelangt (Figur 3d).

Mit dem Einrasten der Sperrklinke 50 an der Drehfallenklinke 40 ist für den Nutzer deutlich ein akustisches Signal wahrnehmbar. Gleichzeitig wird das Seil des Bowdenzugs 12 gespannt. Wie bereits erwähnt, ist der Bowdenzug 12 bzw. das Bowdenzugseil am anderen Ende mit einer Betätigungstaste 16 (im unteren Bereich der Figuren 3a bis 3d in ihrer jeweiligen Position während des Verriegelungsvorganges gezeigt) verbunden. Die Betätigungstaste 16 gelangt erst bei vollständiger Verriegelung, also in der vollständigen Verriegelungsposition VP (Figur 3d) in die obere Position, in der sie einen ansonsten sichtbaren Indikator 70 bedeckt. Der Indikator kann als auffällige, auch leuchtende Markierungsfläche ausgebildet sein. Die Aufwärtsbewegung der Betätigungstaste 16 zur Verdeckung des Indikators erfolgt bei der beschriebenen Verkürzung des betätigungstastennahen Endes des Bowdenzugseils 12 durch eine entsprechende mechanische Umlenkung.

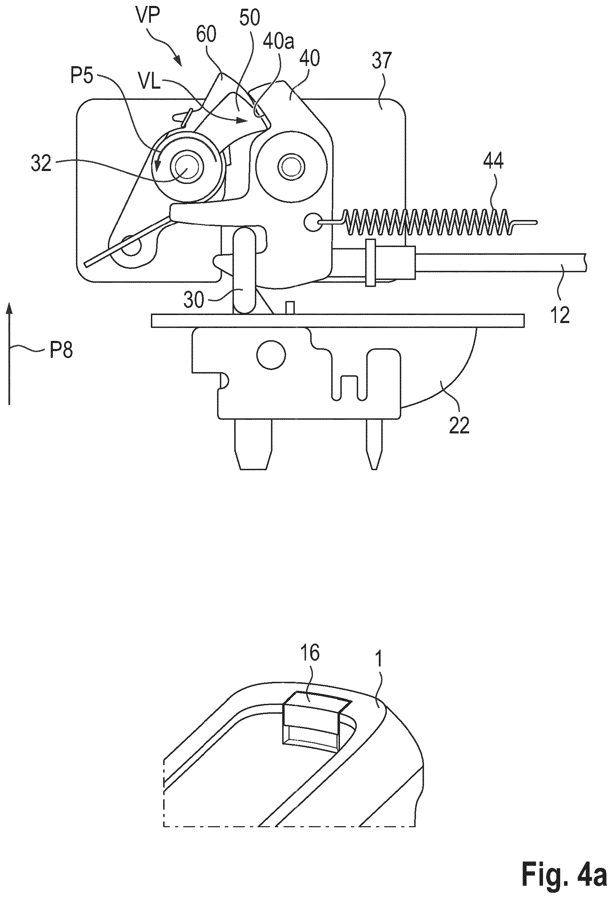

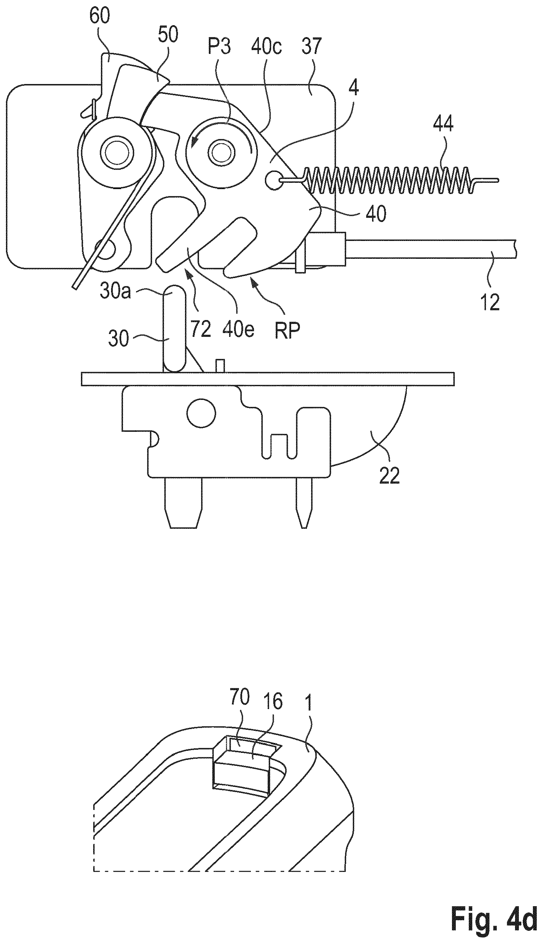

Anhand der Figuren 4a bis 4d wird nun der entgegengesetzte (Pfeilrichtung P8) Verlauf bei Entriegelung der erfindungsgemäßen Fixierungsvorrichtung - also die Überführung des Gegenstandes aus der Verriegelungsposition VP in die Entriegelungsposition EP - erläutert. Die Erläuterung erfolgt auch hierbei nur anhand der Verriegelungselemente auf der Seite der Fangöse 30, wobei entsprechende Bewegungsabläufe gleichermaßen auf der Seite der Fangöse 31 ablaufen.

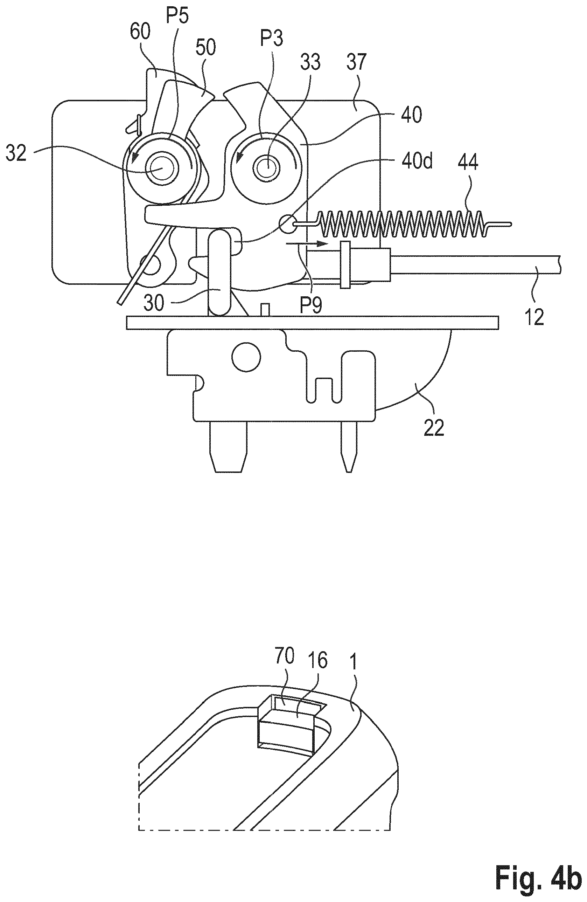

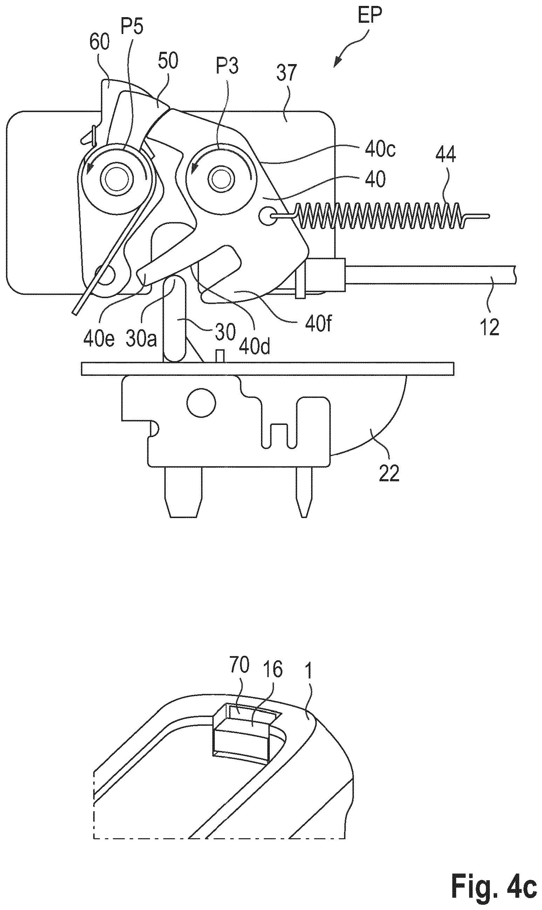

Wie Figur 4a zeigt, ist Ausgangsposition die (auch in Figur 3d gezeigte) Verriegelungsposition VP. Die vollständige und ordnungsgemäße Verriegelung wird durch die Position der Betätigungstaste 16 auf dem Gegenstand 1 unter Abdeckung des Indikators 70 angezeigt. Um die Fixierung zu lösen - mit anderen Worten: um den Entriegelungsvorgang zu initiieren - drückt der Nutzer die Betätigungstaste 16 und bewegt diese damit senkrecht nach unten. Über die Kopplung des Bowdenzugs 12 werden dadurch die Sperrklinke 50 und die Dämpfungsklinke 60 in Pfeilrichtung P5 entgegen dem Uhrzeigersinn mit der Sperrklinkenachse 32 aus der Verriegelungslage VL heraus geschwenkt. Sperrklinke 50 und Dämpfungsklinke 60 lösen sich dadurch von der Kontaktfläche 40a und geben die Entriegelung der Drehfallenklinke 40 frei. Die Drehfallenklinke 40 kann dadurch aufgrund der von der Zugfeder 44 nach rechts in Pfeilrichtung P9 ausgeübten Zugkraft selbsttätig aus der "6-Uhr-Position" in Pfeilrichtung P3 um die Drehfallenachse 33 in ihre Entriegelungsposition EP verschwenken. Dadurch entfernt sich der Fanghaken 40f aus der Fangöse 30 (Figur 4c). Schließlich löst sich der Kontakt mit der Oberseite 30a (Figur 4b), die Vorrichtung gelangt dadurch in die Entriegelungsposition EP. Durch die Kraft der Zugfeder 44 verschwenkt die Drehfallenklinke 40 noch weiter in Pfeilrichtung P3 so weit, bis der Rücken 40c die "4-Uhr-Position" und damit die Drehfallenklinke 40 ihre Endposition - nämlich ihre Ruheposition RP - eingenommen hat. In der Ruheposition ist der Einführbereich 72 für die Fangöse 30 durch die Fangnase 40e zumindest teilweise bedeckt und geschützt. Dadurch ist in vorteilhafter Weise vermieden, dass unbeabsichtigt Objekte, Verunreinigungen, Teppichschlingen, Fasern oder dergleichen in die Fixierungsvorrichtung gelangen können.

Im unteren Bereich der Figuren 4a bis 4d ist die Position der Betätigungstaste 16 für die einzelnen Schritte dargestellt. Man erkennt, dass der Indikator 70 mit dem Herausschwenken der Sperrklinke 50 und der Dämpfungsklinke 60 aus der Verriegelungsposition wieder sichtbar ist. Dem Nutzer wird so zuverlässig angezeigt, dass sich der Gegenstand schon ab der Position bzw. Situation nach Figur 4b nicht mehr in einer ordnungsgemäßen bzw. vollständigen Verriegelungssituation befindet.

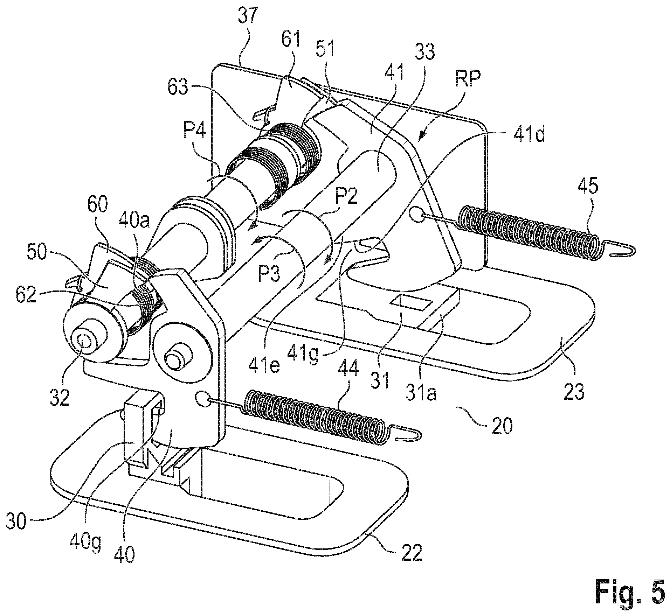

Figur 5 zeigt mit den wesentlichen Verriegelungskomponenten, die in korrekter Funktion zuvor anhand der Figuren 1 bis 4 erläutert worden sind, eine Situation, in der die Verriegelung nicht ordnungsgemäß erfolgt ist. Die Fangöse 31 ist nämlich nicht aus dem Träger 23 in ihre vertikale, funktionale Position (so wie die Fangöse 30) aufgeschwenkt. Vielmehr liegt die Fangöse 31 in der Nichtgebrauchsposition plan zu der Oberseite 20 in dem Träger 23. Damit ist zwar die Drehfallenklinke 40 durch die Zugkraft der Feder 44 so verschwenkt, dass die Fangöse 30 in den Fangbereich 40g der Drehfallenklinke 40 gelangt ist. Damit wäre zwar auch die mit der Drehfallenklinke 40 kooperierende Sperrklinke 50 und die Dämpfungsklinke 60 in der Situation, aufgrund der von der Feder 62 ausgeübten Vorspannung auf die Sperrklinkenachse 32 in Anlage an die Kontaktfläche 40a zu gelangen.

Diese Bewegung ist aber der Sperrklinke 51 und der Dämpfungsklinke 61 auf der anderen, dem Lagerteil 37 nahen Seite nicht möglich. Dies liegt daran, dass vorteilhafterweise zwar die Drehfallenklinken 40, 41 auf der Drehfallenachse 33 unabhängig voneinander in den Pfeilrichtungen P2 bzw. P3 verschwenkbar sind. Während also die Drehfallenklinke 40 wie zuvor anhand der Figuren 4a bis 4d erläutert durch Zusammenwirken mit der Fangöse 30 in ihre Verriegelungsposition verschwenkt werden konnte, ist dies bei der Drehfallenklinke 41 nicht möglich. Da die Fangöse 31 in der Nichtgebrauchsposition ist und ihre Oberseite 31a deshalb nicht auf die voreilende Fangnase 41e einwirken kann, verbleibt die Drehfallenklinke 41 in ihrer durch die Zugkraft der Feder 45 stabilisierten und gehaltenen Ruheposition RP. Wegen der zueinander nur drehstarr bzw. winkelgetreu möglichen Verschwenkbarkeit der Sperrklinken 50, 51 können diese nur synchron zu den zugeordneten Kontaktflächen 40a, 41a einfahren. Da die Sperrklinken in diesem Ausführungsbeispiel fest mit der Sperrklinkenachse 32 verbunden sind, blockiert die Drehfallenklinke 41 eine Rotation der Sperrklinkenachse 32 bzw. der mit dieser verbundenen Sperrklinken 50, 51 in die Verriegelungslage VL.

Mit anderen Worten: Das von beiden Drehfallenklinken gebildete Drehfallenschloss schließt und verriegelt nur, wenn beide Drehfallenklinken den Weg für die Sperrklinken in die Verriegelungslage freigeben. Dadurch ist vorteilhafterweise eine einseitige Verriegelung aufgrund von Bedienungsfehlern oder Unachtsamkeit des Nutzers zuverlässig ausgeschlossen. Der Nutzer wird auf diesen Umstand auch dadurch aufmerksam, dass die Betätigungstaste 16 (Figur 3d) nicht in die Position gelangt, in der der Indikator 70 verdeckt ist. Dem Nutzer wird also zuverlässig angezeigt, dass der Fixierungsvorgang nicht einwandfrei abgeschlossen ist.

Der Verriegelungsmechanismus der erfindungsgemäßen Fixierungsvorrichtung funktioniert sowohl mit klappbaren oder anderweitig versenkbaren als auch mit starr verbauten Aufnahme- oder Anbindungselementen. In jedem Fall sind dabei die beschriebenen Vorteile realisiert, weil die Verriegelung z.B. bei einem Fremdkörper zwischen Aufnahme und dem Gegenstand nicht nur einseitig einrasten kann. Der Benutzer muss also zunächst den Fremdkörper entfernen, um den Gegenstand verriegeln zu können.

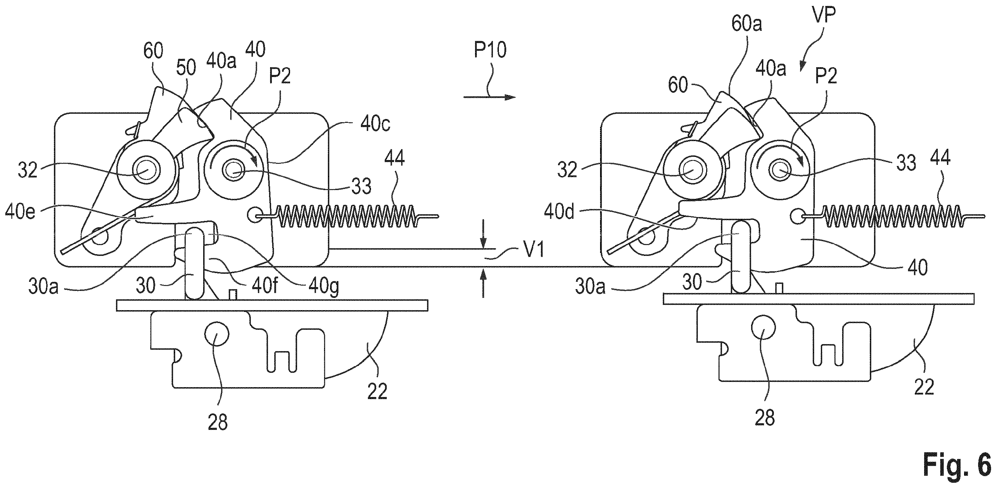

Anhand von Figur 6 wird detailliert das Zusammenspiel der Sperrklinke, der Dämpfungsklinke und der Drehfallenklinke im finalen Fixierungsschritt dargestellt. Auch hier erfolgt die Darstellung nur auf der einen Seite der Fixierungsvorrichtung mithilfe der dortigen Verriegelungspartner. Figur 6 zeigt die letzte Verriegelungsphase, also den Übergang von der in Figur 3c zu der in Figur 3d dargestellten Situation. Der in vertikaler Richtung noch verbleibende, noch zurückzulegende Bewegungsweg V1 beträgt im Ausführungsbeispiel etwa 1,5 mm. Wie die linke Seite der Figur 6 zeigt, ist die Drehfallenklinke 40 noch nicht in ihre vollständige Verriegelungsposition VP verschwenkt, sondern noch einige Grad davon entfernt. Dies ist auch daran erkennbar, dass der Rücken 40c noch nicht exakt in "6-Uhr-Position" steht. Zwar haben die Fangnase 40e und der Fanghaken 40f die Fangöse 30 schon in dem Fangbereich 40g aufgenommen, und die (voreilende) Sperrklinke 50 befindet sich bereits in Kontakt mit der Kontaktfläche 40a. Die (nacheilende) Dämpfungsklinke 60 befindet sich aber noch außerhalb des Eingriffs und noch nicht in Kontakt mit der Kontaktfläche 40a. Mit der letzten Schwenkbewegung in Pfeilrichtung P2 um die Drehfallenachse 33 wird nun die Drehfalle 40 wie durch den Pfeil P10 symbolisiert und in der Figur 6 rechts dargestellt in die vollständige Verriegelungsposition VP überführt, indem das obere Ende 30a in Kontakt mit der Innenseite 40d gelangt. So gelangt die Dämpfungsklinke 60 mit ihrer Kontaktfläche 60a in Anlage an die Kontaktfläche 40a. Die Sperrklinke 50 ist in ihrer axialen Erstreckung geringfügig geringer bemessen als die Dämpfungsklinke 60, so dass nun ein besonders festes und damit klapperfreies bzw. störgeräuschfreies Verriegeln der Drehfalle 40 durch die nunmehr vollständig eingedrehte Dämpfungsklinke 60 bewirkt ist. Die Dämpfungsklinken spannen somit das Drehfallenschloss weiter und ermöglichen einen Ausgleich von Fertigungstoleranzen und unterschiedlicher Höhen der Bodenbeläge des Fahrzeugs.

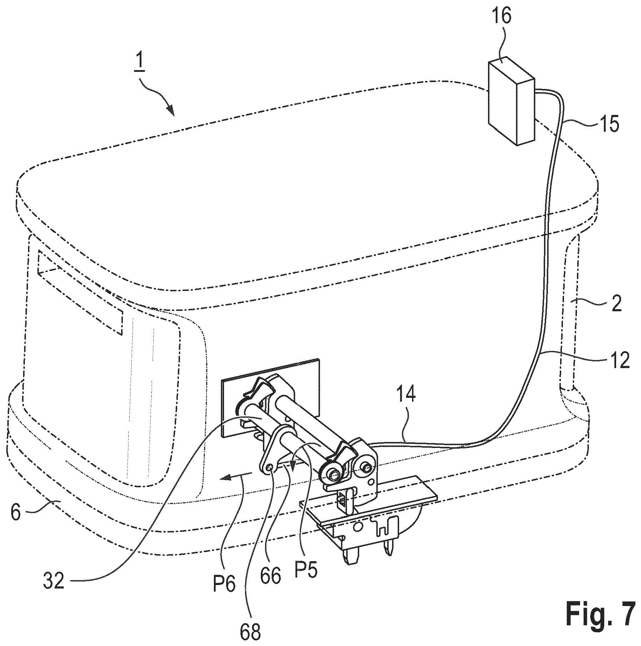

Figur 7 verdeutlicht die Anbindung des Endes 66 des Bowdenzugseils an die Sperrklinkenachse 32. Das Ende 66 ist in die korrespondierende Halterung (Aufnahme) 68 eingehängt. In der dargestellten Verriegelungsposition der Drehfallenklinken ist der Bowdenzug in Pfeilrichtung P6 vorgespannt. Beim Betätigung der Betätigungstaste 16 bewirkt der Bowdenzug 12 ein Verschwenken der Sperrklinkenachse 32 in Pfeilrichtung P5 und entgegen der Kraft der Federn 62, 63, wodurch sich die Sperrklinken 50, 51 und die Dämpfungsklinken 60, 61 aus der Verriegelungsposition VP entfernen.

### Bezugszeichenliste

- 1: Gegenstand
- 2: Behälter
- 3: Ablagebereiche
- 5: Stauraum
- 6: Basis
- 7: Unterseite
- 8: unterer Rand
- 10: Fixierungsvorrichtung
- 12: Bowdenzug
- 13: Betätigungseinrichtung
- 14: erstes Ende des Bowdenzugs
- 15: anderes Ende des Bowdenzugs
- 16: Betätigungstaste
- 17: oberer Rand
- 20: Oberseite des Fahrzeugbodens
- 21: Fahrzeugboden (Chassis)
- 22, 23: Träger
- 24: Aufnahme
- 25, 26: Aufnahmeelemente
- 28: Schwenkachse
- 29: Abstand
- 30, 31: Fangösen
- 30a: oberes Ende
- 32: Sperrklinkenachse
- 33: Drehfallenachse
- 32a, 32b: Achsenden der Drehfallenachse
- 33a, 33b: Achsenden der Drehfallenachse
- 36, 37: seitliches Lagerteil
- 38, 39: Sicherungsring
- 40, 41: Drehfallenklinke
- 40a, 41a: Kontaktfläche
- 40b: Ruhefläche der Drehfallenklinke 40
- 40c: Rücken der Drehfallenklinke 40
- 40d: Innenseite
- 40e: Fangnase
- 40f: Fanghaken
- 40g: Fangbereich (Ausnehmung)
- 41e: Fangnase
- 41g: Ausnehmung
- 44, 45: Zugfedern
- 50, 51: Sperrklinken
- 60, 61: Dämpfungsklinken (Komfortklinken)
- 62, 63: Schraubenfedern
- 65: Halterung
- 66: Ende des Bowdenzugseils
- 68: Halterung
- 70: Indikator
- 72: Einführöffnung

- P1: Pfeilrichtung
- P2: Pfeilrichtung im Uhrzeigersinn
- P3: Pfeilrichtung entgegen dem Uhrzeigersinn
- P4: Pfeilrichtung im Uhrzeigersinn
- P5: Pfeilrichtung entgegen dem Uhrzeigersinn
- P6: Pfeilrichtung
- P7: Pfeilrichtung
- P8: Pfeilrichtung
- P9: Pfeilrichtung
- P10: Pfeil

- A: Bereich
- V1: Bewegungsweg
- EP: Entriegelungsposition
- RP: Ruheposition
- VP: Verriegelungsposition
- VL: Verriegelungslage
- Z: Zubewegung

## Patentansprüche

1. Fixierungsvorrichtung (10) zur lösbaren Fixierung eines Gegenstandes (1) an einer Aufnahme (24), die insbesondere in einem Fahrzeug angeordnet ist, wobei die Aufnahme (24) mindestens zwei zueinander beabstandete Aufnahmeelemente (25, 26) umfasst,
- mit einer Drehfallenachse (33) und einer Sperrklinkenachse (32),
- mit zwei Drehfallenklinken (40, 41), die auf der Drehfallenachse (33) den Aufnahmeelementen (25, 26) zugeordnet und diesen entsprechend beabstandet so gelagert sind,
- dass sie unabhängig voneinander jeweils in eine Verriegelungsposition (VP), in der sie in fixierendem Eingriff mit dem ihr jeweils zugeordneten Aufnahmeelement (25, 26) sind, und in eine Entriegelungsposition (EP), in der sie außer Eingriff mit dem ihr jeweils zugeordneten Aufnahmeelement (25, 26) sind, verschwenkbar sind,
**dadurch gekennzeichnet, dass**
- mit zwei auf der Sperrklinkenachse (32) angeordneten Sperrklinken (50, 51), die jeweils mit einer zugeordneten Drehfallenklinke (40, 41) zusammenwirken und die relativ zueinander winkelfest sind,
- so dass die Sperrklinken (50, 51) nur dann in eine Verriegelungslage (VL) verschwenkbar sind, in der sie die ihnen jeweils zugeordnete Drehfallenklinke (40, 41) in deren Verriegelungsposition (VP) halten, wenn beide Drehfallenklinken (40, 41) in ihre Verriegelungsposition (VP) gelangt sind.

2. Fixierungsvorrichtung (10) nach dem vorhergehenden Anspruch, wobei
- die Sperrklinken (50, 51) auf der Sperrklinkenachse (32) drehfest angeordnet sind.

3. Fixierungsvorrichtung (10) nach wenigstens einem der vorhergehenden Ansprüche, wobei
- auf die Sperrklinkenachse (32) oder auf die Sperrklinken (50, 51) eine Betätigungseinrichtung (13) einwirkt, die bei Betätigung bewirkt, dass die Sperrklinke (50, 51) aus der Verriegelungslage (VL) unter Bewegungsfreigabe der Drehfallenklinke (40, 41) heraus schwenkbar ist.

4. Fixierungsvorrichtung (10) nach Anspruch 3, wobei
- die Betätigungseinrichtung (13) einen Bowdenzug (12) und eine mit diesem zusammenwirkende Betätigungstaste (16) aufweist und
- die Betätigungstaste (16) nur dann in eine die Fixierung des Gegenstandes (1) anzeigende Stellung gelangt, wenn beide Sperrklinken (50, 51) in ihrer Verriegelungslage (VL) sind.

5. Fixierungsvorrichtung (10) nach Anspruch 4, wobei
- die Betätigungstaste (16) in ihrer die Fixierung des Gegenstandes (1) anzeigenden Stellung einen Indikator (70) verdeckt, der andernfalls sichtbar ist.

6. Fixierungsvorrichtung (10) nach wenigstens einem der vorhergehenden Ansprüche, wobei
- die Drehfallenklinken (40, 41) bei Lösung der Fixierung des Gegenstandes (1) aus ihrer Entriegelungsposition (EP) in eine Ruheposition (RP) verschwenken, in der ein Eingriffsbereich (72) der jeweiligen Drehfallenklinke (40, 41) geschützt ist.

7. Fixierungsvorrichtung (10) nach wenigstens einem der vorhergehenden Ansprüche, wobei
- jede Drehfallenklinke (40, 41) eine Wirkfläche (40a, 41a) aufweist, auf die das jeweilige Aufnahmeelement (25, 26) in einer Zubewegung (Z) beim initialen Fixierungsvorgang auftrifft,
- wobei die Drehfallenklinke (40, 41) allein durch die Zubewegung (Z) aus ihrer Ruheposition (RP) über die Entriegelungsposition (EP) in die Verriegelungsposition (VP) verschwenkt wird.

8. Fixierungsvorrichtung (10) nach wenigstens einem der vorhergehenden Ansprüche, wobei
- jede Sperrklinke (50, 51) in Richtung auf ihre Verriegelungslage (VL) vorgespannt ist und sich in der Entriegelungsposition (EP) oder Ruheposition (RP) der Drehfallenklinke (40, 41) auf der Drehfallenklinke (40, 41) positionsstabilisierend abstützt.

9. Fixierungsvorrichtung (10) nach wenigstens einem der vorhergehenden Ansprüche, wobei
- zu jeder Sperrklinke (50, 51) eine kooperierende, in der Schwenkbewegung in die Verriegelungsposition (VP) nacheilende Dämpfungsklinke (60, 61) vorgesehen ist, die in der Verriegelungsposition (VP) gegenüber der Sperrklinke (50, 51) mit geringerem Kontaktspiel zu der zugeordneten Drehfallenklinke (40, 41) ausgestattet ist.

## Claims

1. Fixing device (10) for releasably fixing an object (1) to a receptacle (24) which is arranged in particular in a vehicle, the receptacle (24) comprising at least two receiving elements spaced apart from one another (25, 26),
- having a rotary latch shaft (33) and a blocking detent shaft (32),
- having two rotary latch detents (40, 41) which are assigned to the receiving elements (25, 26) on the rotary latch shaft (33) and are mounted at a corresponding distance therefrom,
- such that they can be pivoted independently of one another in each case into a locking position (VP), in which they are in fixing engagement with the receiving element (25, 26) assigned to them in each case, and into an unlocking position (EP), in which they are disengaged from the receiving element (25, 26) assigned to them in each case,
**characterized in that**
- having two blocking detents (50, 51) arranged on the blocking detent shaft (32), each interacting with an assigned rotary latch detent (40, 41) and fixed at an angle relative to each other,
- such that the blocking detents (50, 51) can only then be pivoted into a locking orientation (VL) in which they hold the rotary latch detent (40, 41) assigned to them in each case in its locking position (VP) when both rotary latch detents (40, 41) have reached their locking position (VP).

2. Fixing device (10) according to the preceding claim,
- the blocking detents (50, 51) being arranged on the blocking detent shaft (32) in a rotationally fixed manner.

3. Fixing device (10) according to at least one of the preceding claims,
- an actuating device (13) acting on the blocking detent shaft (32) or on the blocking detents (50, 51), which actuating device, when actuated, causes the blocking detent (50, 51) to be able to be pivoted out of the locking orientation (VL) while releasing the rotary latch detent (40, 41) for movement.

4. Fixing device (10) according to claim 3,
- the actuating device (13) comprising a Bowden cable (12) and an actuating button (16) interacting therewith, and
- the actuating button (16) only reaching a position that indicates the fixing of the object (1) when both blocking detents (50, 51) are in their locking orientation (VL).

5. Fixing device (10) according to claim 4,
- the actuating button (16), in its position that indicates the fixing of the object (1), covering an indicator (70) which is otherwise visible.

6. Fixing device (10) according to at least one of the preceding claims,
- the rotary latch detents (40, 41) pivoting from their unlocking position (EP) into a rest position (RP) when the fixing of the object (1) is released, in which rest position an engagement region (72) of the relevant rotary latch detent (40, 41) is protected.

7. Fixing device (10) according to at least one of the preceding claims,
- each rotary latch detent (40, 41) having an active region (40a, 41a) onto which the relevant receiving element (25, 26) impacts in a closing movement (Z) during the initial fixing process,
- the rotary latch detent (40, 41) being pivoted solely by the closing movement (Z) from its rest position (RP) via the unlocking position (EP) into the locking position (VP).

8. Fixing device (10) according to at least one of the preceding claims,
- each blocking detent (50, 51) being pre-loaded in the direction of its locking position (VL) and being supported on the rotary latch detent (40, 41) in a position-stabilizing manner in the unlocking position (EP) or rest position (RP) of the rotary latch detent (40, 41).

9. Fixing device (10) according to at least one of the preceding claims,
- a cooperating cushioning detent (60, 61) being provided for each blocking detent (50, 51), which cushioning detent lags behind in the pivoting movement into the locking position (VP) and which, in the locking position (VP), is provided with less contact play with the assigned rotary latch detent (40, 41) compared with the blocking detent (50, 51).

## Revendications

1. Dispositif de fixation (10) pour la fixation amovible d'un objet (1) sur un logement (24), qui est agencé en particulier dans un véhicule, dans lequel le logement (24) comprend au moins deux éléments de logement (25, 26) espacés l'un de l'autre,
- comportant un axe de loquet rotatif (33) et un axe de cliquet de blocage (32),
- comportant deux cliquets de loquet rotatif (40, 41) qui sont associés aux éléments de logement (25, 26) sur l'axe de loquet rotatif (33) et sont montés à une distance correspondante de ceux-ci,
- de sorte qu'ils peuvent pivoter indépendamment l'un de l'autre respectivement dans une position de verrouillage (VP), dans laquelle ils sont en prise de fixation avec l'élément de logement (25, 26) qui leur est respectivement associé, et dans une position de déverrouillage (EP), dans laquelle ils sont hors de prise avec l'élément de logement (25, 26) qui leur est respectivement associé,
**caractérisé en ce que**
- comportant deux cliquets de blocage (50, 51) agencés sur l'axe de cliquet de blocage (32), qui coopèrent respectivement avec un cliquet de loquet rotatif (40, 41) associé et qui sont fixes angulairement l'un par rapport à l'autre,
- de sorte que les cliquets de blocage (50, 51) ne peuvent être pivotés dans une position de verrouillage (VL) dans laquelle ils maintiennent le cliquet de loquet rotatif (40, 41) qui leur est respectivement associé dans sa position de verrouillage (VP) que lorsque les deux cliquets de loquet rotatif (40, 41) sont parvenus dans leur position de verrouillage (VP).

2. Dispositif de fixation (10) selon la revendication précédente, dans lequel
- les cliquets de blocage (50, 51) sont agencés de manière fixe en rotation sur l'axe de cliquet de blocage (32).

3. Dispositif de fixation (10) selon au moins l'une des revendications précédentes, dans lequel
- un dispositif d'actionnement (13) agit sur l'axe de cliquet de blocage (32) ou sur les cliquets de blocage (50, 51), qui, lors de l'actionnement, fait que le cliquet de blocage (50, 51) peut être pivoté hors de la position de verrouillage (VL) en libérant le mouvement du cliquet de loquet rotatif (40, 41).

4. Dispositif de fixation (10) selon la revendication 3, dans lequel
- le dispositif d'actionnement (13) présente un câble Bowden (12) et une touche d'actionnement (16) coopérant avec celui-ci et
- la touche d'actionnement (16) n'arrive dans une position indiquant la fixation de l'objet (1) que lorsque les deux cliquets de blocage (50, 51) sont dans leur position de verrouillage (VL).

5. Dispositif de fixation (10) selon la revendication 4, dans lequel
- la touche d'actionnement (16), dans sa position indiquant la fixation de l'objet (1), recouvre un indicateur (70) qui est autrement visible.

6. Dispositif de fixation (10) selon au moins l'une des revendications précédentes, dans lequel
- les cliquets de loquet rotatif (40, 41), lors du relâchement de la fixation de l'objet (1), pivotent de leur position de déverrouillage (EP) dans une position de repos (RP), dans laquelle une zone de mise en prise (72) du cliquet de loquet rotatif (40, 41) respectif est protégée.

7. Dispositif de fixation (10) selon au moins l'une des revendications précédentes, dans lequel
- chaque cliquet de loquet rotatif (40, 41) présente une surface active (40a, 41a) sur laquelle l'élément de logement (25, 26) respectif vient buter dans un mouvement de fermeture (Z) lors du processus de fixation initial,
- dans lequel le cliquet de loquet rotatif (40, 41) est pivoté de sa position de repos (RP) à la position de verrouillage (VP) en passant par la position de déverrouillage (EP) uniquement par le mouvement de fermeture (Z).

8. Dispositif de fixation (10) selon au moins l'une des revendications précédentes, dans lequel
- chaque cliquet de blocage (50, 51) est précontraint en direction de sa position de verrouillage (VL) et s'appuie sur le cliquet de loquet rotatif (40, 41) en stabilisant sa position dans la position de déverrouillage (EP) ou la position de repos (RP) du cliquet de loquet rotatif (40, 41).

9. Dispositif de fixation (10) selon au moins l'une des revendications précédentes, dans lequel
- il est prévu pour chaque cliquet de blocage (50, 51) un cliquet d'amortissement (60, 61) coopérant, à retardement dans le mouvement de pivotement dans la position de verrouillage (VP), qui est équipé dans la position de verrouillage (VP) par rapport au cliquet de blocage (50, 51) d'un jeu de contact plus faible par rapport au cliquet de loquet rotatif (40, 41) associé.
